(19)

Europäisches Patentamt
European Patent Office
Office européen des brevets

(11)  **EP 3 038 052 B1**

(12)  **EUROPEAN PATENT SPECIFICATION**

(45) Date of publication and mention
of the grant of the patent:
**18.05.2022  Bulletin 2022/20**

(21) Application number: **15202420.4**

(22) Date of filing: **23.12.2015**

(51) International Patent Classification (IPC):
**G06T 5/00** *(2006.01)*      **G06T 5/30** *(2006.01)*
**G06T 7/00** *(2017.01)*      **G06T 7/11** *(2017.01)*
**G06T 7/143** *(2017.01)*      **G06T 7/155** *(2017.01)*

(52) Cooperative Patent Classification (CPC):
**G06T 5/002; G06T 5/30; G06T 7/0012; G06T 7/11;**
**G06T 7/143; G06T 7/155;** G06T 2207/10024;
G06T 2207/20208; G06T 2207/30041;
G06T 2207/30096; G06T 2207/30101

(54) **DIAGNOSIS SUPPORT APPARATUS AND IMAGE PROCESSING METHOD IN THE SAME APPARATUS**

DIAGNOSEUNTERSTÜTZUNGSVORRICHTUNG UND BILDVERARBEITUNGSVERFAHREN IN DIESER VORRICHTUNG

APPAREIL DE SUPPORT DE DIAGNOSTIC ET PROCÉDÉ DE TRAITEMENT D'IMAGE DANS LE MÊME APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.12.2014  JP 2014261572
14.05.2015  JP 2015098708**

(43) Date of publication of application:
**29.06.2016  Bulletin 2016/26**

(73) Proprietor: **Casio Computer Co., Ltd.
Tokyo 151-8543 (JP)**

(72) Inventor: **NAKAJIMA, Mitsuyasu
Hamura-shi, Tokyo 205-8555 (JP)**

(74) Representative: **Grünecker Patent- und
Rechtsanwälte
PartG mbB
Leopoldstraße 4
80802 München (DE)**

(56) References cited:
**US-A1- 2007 002 275    US-A1- 2012 195 481**

• **MENDIOLA-SANTIBAÑEZ JORGE D ET AL:**
**"Filtering of mixed Gaussian and impulsive noise using morphological contrast detectors", IET IMAGE PROCESSING, IET, UK, vol. 8, no. 3, 1 March 2014 (2014-03-01), pages 131-141,** XP006047715, ISSN: 1751-9659, DOI: **10.1049/IET-IPR.2012.0615**
• **SALEMBIER ET AL: "Morphological multiscale segmentation for image coding", SIGNAL PROCESSING, ELSEVIER SCIENCE PUBLISHERS B.V. AMSTERDAM, NL, vol. 38, no. 3, 1 August 1994 (1994-08-01) , pages 359-386,** XP026671014, ISSN: 0165-1684, DOI: **10.1016/0165-1684(94)90155-4 [retrieved on 1994-08-01]**
• **ANNIE EDEL QUINN E ET AL: "Retinal blood vessel segmentation using curvelet transform and morphological reconstruction", EMERGING TRENDS IN COMPUTING, COMMUNICATION AND NANOTECHNOLOGY (ICE-CCN), 2013 INTERNATIONAL CONFERENCE ON, IEEE, 25 March 2013 (2013-03-25), pages 570-575,** XP032423828, DOI: **10.1109/ICE-CCN.2013.6528564 ISBN: 978-1-4673-5037-2**

**(Cont. next page)**

EP 3 038 052 B1

- **MENDONÇA A M ET AL: "Segmentation of Retinal Blood Vessels by Combining the Detection of Centerlines and Morpholigical Reconstruction", IEEE TRANSACTIONS ON MEDICAL IMAGING, IEEE SERVICE CENTER, PISCATAWAY, NJ, US, vol. 25, no. 9, 1 September 2006 (2006-09-01), pages 1200-1213, XP001545947, ISSN: 0278-0062, DOI: 10.1109/TMI.2006.879955**

**Description**

The present invention relates to a diagnosis support apparatus, and an image processing method in the diagnosis support apparatus.

Generally, visual inspection is necessarily performed to diagnose a cutaneous legion, thereby obtaining an amount of information. However, not only discrimination between a mole and a spot but also discrimination between a benign tumor and a malignant tumor are substantially difficult with a naked eye inspection and even a magnifying glass inspection. For the reasons, dermoscopic inspection in which a dermoscope-equipped camera is used to capture an image of a disease has been conventionally performed.

The dermascope is a noninvasive diagnostic device in which a disease irradiated with light from, for example, a halogen lamp, and unobstructed by reflective light due to echo gel or a polarization filter is magnified (typically ×10) and subjected to observation. A dermoscopic diagnosis can be defined as the inspection of skin diseases with the dermoscope. For more detail, see internet URL (http://www.twmu.ac.jp/DNH/department/dermatology/dermoscopy.html) (accessed on September 1, 2014). In accordance with the dermoscopic diagnosis, scattered reflection occurring due to a cuticle is eliminated, thereby rendering the distribution of pigmentation from an epidermis to a superficial intradermal layer increasingly visible.

For example, Patent Literature 1 (Japanese patent publication No. 2005-192944 (A)) discloses technologies of a remote diagnosis apparatus of diagnosing a pigmented skin disease employing a value such as color, a texture, an asymmetricity, and a circularity based on an image of a skin captured by the dermoscope. In accordance with Patent Literature 1, a portable phone provided with a dermoscope-equipped camera is used, and an image of a skin having a disease of a benign nevus pigmentosus and etc. and having a risk of a melanoma is captured by the dermoscope. The portable phone is connected to an internet due to its network connecting function, and the image of the skin captured is transmitted via the internet to the remote diagnosis apparatus to request a diagnosis. Upon receiving the image of the skin based on the request, the remote diagnosis apparatus uses a melanoma diagnosis program to determine whether based on the image of the skin the disease is a melanoma or not, or in a case where the disease is the melanoma, which stage of the melanoma is. The determination as a result is transmitted to a physician having requested the diagnosis. Moreover, examples of morphological image processing methods are disclosed in Patent Literatures 2 and 3 and Non-Patent Literatures 1 to 3.

While diagnosis based on the afore-mentioned dermoscopic image has become widely used in the field of cutaneous disease, clear shape change or pattern is often difficult to obtain. In addition, an observation of the image and a determination of a lesion actually depend on a skill of a physician or clinician. While an algorism for performing a top-hat morphology processing to clearly extract a linear vessel or punctate vessel can be considered, when applied to a vessel with an irregular image gradient it results in a false pattern such as a moire, thereby deteriorating the accuracy of diagnosis.

[Patent Literature]

[Patent Literature 1] Japanese patent publication No. 2005-192944 (A)
[Patent Literature 2] US 2012/195481 A1
[Patent Literature 3] US 2007/002275 A1

[Non-Patent Literature]

[Non-Patent Literature 1] MENDIOLA-SANTIBANEZ JORGE D ET AL, "Filtering of mixed Gaussian and impulsive noise using morphological contrast detectors", IET IMAGE PROCESSING, IET, UK, (20140301), vol. 8, no. 3, doi:10.1049/IET-IPR.2012.0615, ISSN 1751-9659, pages 131 - 141
[Non-Patent Literature 2] SALEMBIER ET AL, "Morphological multiscale segmentation for image coding", SIGNAL PROCESSING, ELSEVIER SCIENCE PUBLISHERS B.V. AMSTERDAM, NL, vol. 38, no. 3, doi:10.1016/0165-1684(94)90155-4, ISSN 0165-1684, (19940801), pages 359 - 386
[Non-Patent Literature 3] ANNIE EDEL QUINN E ET AL, "Retinal blood vessel segmentation using curvelet transform and morphological reconstruction", EMERGING TRENDS IN COMPUTING, COMMUNICATION AND NANOTECHNOLOGY (ICE-CCN), 2013 INTERNATIONAL CONFERENCE ON, IEEE, (20130325), doi:10.1109/ICE-CCN.2013.6528564, ISBN 978-1-4673-5037-2, pages 570 - 575

The invention is provided for solving the afore-mentioned drawbacks and problems. The objective of the invention is to provide a diagnosis support apparatus, an image processing method in the same apparatus, and a program associated with the same method, by which a false pattern is decreased and diagnostic accuracy is improved.

This is achieved by the features of the independent claims.

The inventive diagnosis support apparatus, the inventive image processing method in the same apparatus, and the inventive medium storing a program associated with the same method can cause a physician to easily make a diagnosis and improve diagnostic accuracy.

FIG. 1 is a block diagram showing a configuration of a first embodiment of a diagnosis support apparatus in accordance with the invention.

FIG. 2 is a flow chart illustrating a basic processing operation of the first embodiment of the diagnosis apparatus in accordance with the invention.

FIG. 3 is a flow chart illustrating an exemplary vessel extraction E processing of Fig. 2.

Fig. 4 is a flow chart illustrating an exemplary processing of obtaining a candidate vessel image from a brightness image of FIG. 3

FIG. 5 is a flow chart illustrating an exemplary processing operation of extracting a likelihood of vessel as a likelihood A as defined in FIG. 3.

FIG. 6 is a flow chart illustrating another exemplary processing operation of extracting a likelihood of vessel as a likelihood A as defined in FIG. 3.

FIG. 7 is a flow chart illustrating another exemplary vessel extraction E processing of FIG. 2.

FIG. 8 is a flow chart illustrating a processing operation of performing vessel extraction E based on the likelihood of vessel of FIG. 7.

FIG. 9 shows an exemplary display screen configuration of the first embodiment of the diagnosis support apparatus in accordance with the invention.

FIG. 10 is a flow chart illustrating a basic processing operation of a second embodiment of the diagnosis apparatus in accordance with the present invention.

FIG. 11 is a flow chart illustrating an exemplary processing of obtaining a candidate vessel image from a brightness image in accordance with the second embodiment of the invention.

FIG. 12 shows an exemplary display screen configuration of the second embodiment of the diagnosis support apparatus in accordance with the invention.

FIG. 13 is a flow chart illustrating a basic processing operation of a third embodiment of the diagnosis apparatus in accordance with the present invention.

FIG. 14 is a flow chart illustrating an exemplary processing of obtaining a candidate vessel image from a brightness image in accordance with the third embodiment of the invention.

FIG. 15 is a flow chart illustrating an exemplary processing of clarifying the brightness image of FIG. 14 to obtain HDR image.

Referring to the accompanying drawings, an embodiment of the invention will be hereinafter described in detail. Furthermore, the same reference numeral is assigned to the same element or part throughout the overall specification.

[First Embodiment]

[Configuration of First Embodiment]

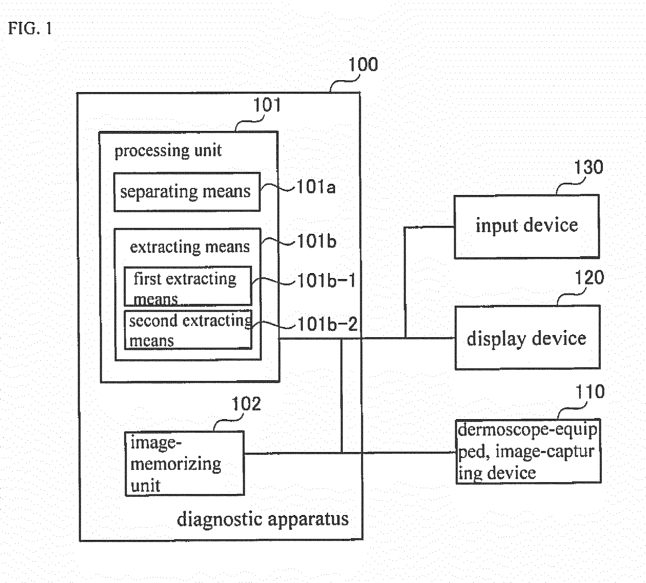

FIG. 1 is a block diagram showing a configuration of a diagnosis support apparatus 100, a first embodiment of the diagnosis support apparatus in accordance with the invention. Referring to FIG. 1, an image-capturing device 110 equipped with a dermoscope, which can be hereinafter designated as an "image-capturing device 110" or "dermoscope-equipped, image-capturing device 110" throughout the specification, is connected to the diagnosis support apparatus 100. The dermoscope-equipped, image-capturing device 110 is configured to capture an image (i.e., a dermoscopic image or an original image) of an affected area in accordance with an instruction from the diagnostic support apparatus 100 (in particular, a processing unit 101), memorize the captured image in an image-memorizing unit 102, and display the captured image on a predetermined area of a display device 120. Furthermore, the captured image is highlighted by the processing unit 101, and then memorized in the image-memorizing unit 102 and displayed on the predetermined area of the display device 120. An input device 130 is configured to perform an instruction for starting to capture an image such as a dermoscopic image, and selection of a region in the dermoscopic image, which will be described below.

The display device 120 may be a LCD (Liquid Crystal Display) monitor, and the input device 130 may be a mouse.

The processing unit 101 is configured to process the captured image as memorized in the image-memorizing unit 102, and has a separating means 101a and an extracting means 101b. The processing unit 101 may further have a clarifying means 101c and an embodiment where the processing unit 101 is provided with the clarifying means 101c is described below as a third embodiment.

The separating means 101a function as a means of separating the captured image into a brightness component and a color information component.

The extracting means 101b function as a means of extracting a region to be diagnosed, and has at least one of a first extracting means 101b-1 of extracting a candidate region based on the brightness component, and a second extracting means 101b-2 of extracting a likelihood of region based on a color space composed of the brightness component and the color information component. The extracting means 101b perform a morphology processing including a smoothing filter processing on the candidate region or the likelihood of the region as extracted.

In a case where the extracting means 101b extract a shape indicating the candidate region or the likelihood of the region out of structuring elements in the captured image, the first extracting means 101b-1 may perform a first morphology processing using the brightness component to extract the candidate region, and the second extracting means 101b-2 may extract the likelihood of the region using the color space. The extracting means 101b may combine an extracted candidate region with an extracted likelihood of the region to generate an extracted image.

In a case where the extracting means 101b extract a shape indicating the candidate region or the likelihood of the region out of structuring elements in the captured image, the second extracting means 102b-2 may extract the likelihood of the region using the color space, and the extracting means 101b may perform a second morphology processing using an extracted likelihood of the region to generate a region-extracted image.

In this regard, the first morphology processing includes a closing where a dilation and an erosion are repeatedly performed on the extracted brightness component in this order, a smoothing filter processing that is performed on the closing-processed brightness component, and a subtracting processing of subtracting the brightness component of the captured image from the smoothing filter-processed brightness component. The second morphology processing includes an opening where the erosion and the dilation are repeatedly performed on the extracted likelihood of the region in this order, a smoothing filter processing that is performed on the opening-processed likelihood of the region, and a subtracting processing of subtracting the smoothing filter-processed likelihood of the region from the extracted likelihood of the region. Furthermore, an image that is obtained as a result of the closing is defined by "image A"; a processing unit by which the image A is prepared is defined by a "first processing module"; an image that is obtained as a result of the opening is defined by "image B"; and a processing unit by which the image B is prepared is defined by a "second processing module".

Each of the separating means 101a and the extracting means 101b (i.e., the first extracting means 101b-1 and the second extracting means 101b-2) as described above can execute the afore-mentioned original function thereof by the processing unit 101's sequentially reading a program in accordance with the first embodiment of the invention, owned by the processing unit 101.

[Operation of First Embodiment]

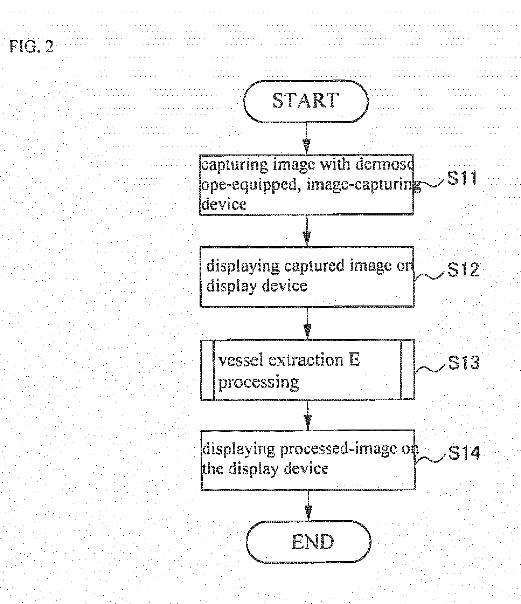

The operation (i.e., image processing method) of the diagnosis support apparatus 100 in accordance with the first embodiment as shown in FIG. 1 is described in detail with reference to FIG. 2 and below. The operation of the diagnosis support apparatus 100 as described below can be done by causing a computer to execute each corresponding function. The same logic will be applied to a second embodiment and a third embodiment which will be described below.

FIG. 2 depicts the flow of basic processing operation of the diagnosis support apparatus 100 in accordance with the first embodiment of the invention. Referring to FIG. 2, the processing unit 101 firstly acquires an image of an affected area (i.e., a cutaneous lesion) that is captured by the dermoscope-equipped, image-capturing device 110 (Step S11). Then, the captured image as acquired is memorized in the predetermined area of the image-memorizing unit 102, and is displayed on the display device 120 (Step S12). Subsequently, the processing unit 101 performs vessel extraction E processing on the captured image (Step S13), performs highlighting processing on the extracted vessel, and displays the processed image and the captured image as previously displayed in parallel on the display device 120. Diagnosis is left to a physician (Step S14).

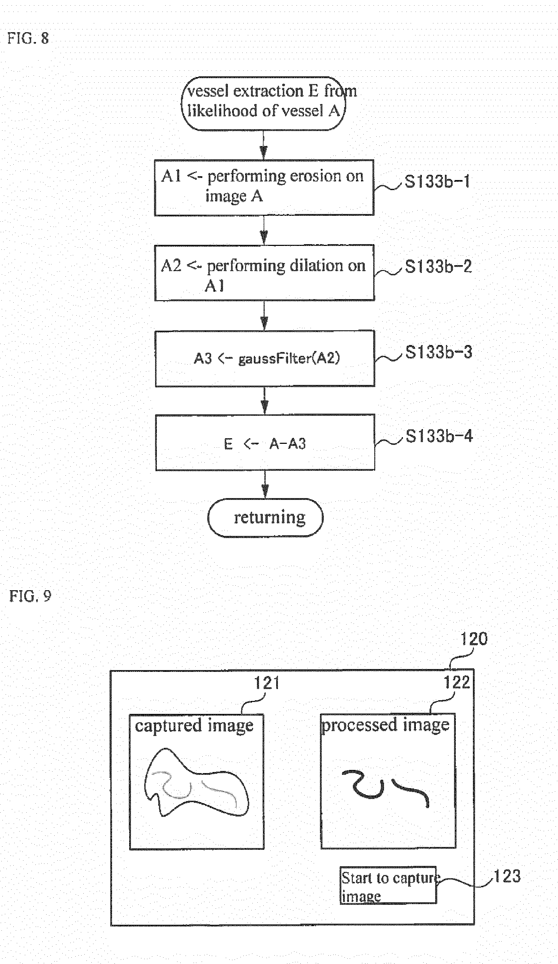

An exemplary image of a display screen displayed on the display device 120 is shown in FIG. 9. In the screen of FIG. 9, a captured image-displaying section 121 in which the captured image is displayed is arranged at a left side and a highlighted image-displaying section 122 in which the highlighted image of vessel is shown is arranged at a right side. For example, upon the physician's clicking a button of "start to capture image" 123 which is located at a bottom right of the screen of the display device 120 with the input device 130, the dermoscope-equipped, image-capturing device 110 starts to capture the image of the affected area. Due to the vessel extraction processing performed by the processing unit 101, the captured image and the highlighted image of the vessel extracted out of the captured image are respectively displayed in the sections 121 and 122 arranged in parallel.

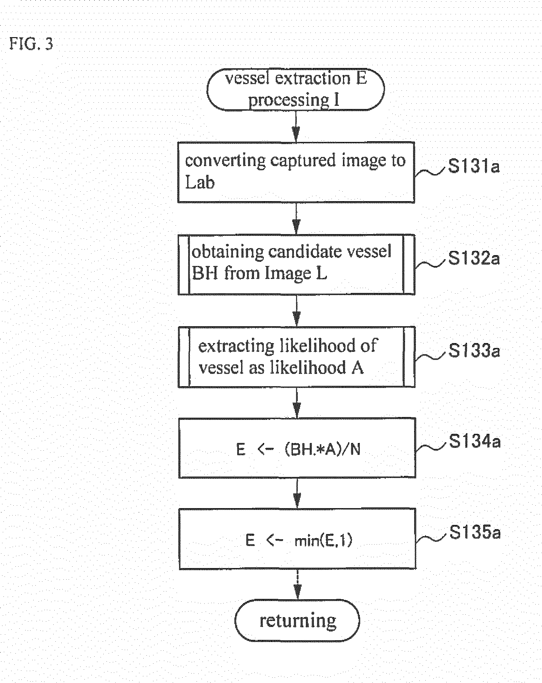

The details of the vessel extraction E processing as defined in Step S13 of FIG. 2 are shown in FIG. 3. Referring to FIG. 3, the separating means 101a of the processing unit 101 firstly convert the captured image from RGB color space to Lab color space (CIE 1976 L*a*b* color space) (Step S131a). The details of the Lab color space are described in, for example, internet URL (http://Ja.wikipedia.org/wiki/Lab%E8%89%B2%E7%A9%BA%E9%96%93) (accessed on September 1, 2014). Hereinafter, *L*, *a* and *b* of coordinate axes in the *Lab* color space are written in bold italics.

Next, the extracting means 101b of the processing unit 101 extract the region selected as the object to be diagnosed. Specifically, the first extracting means 101b-1 extract the candidate for the selected region (i.e., a candidate vessel) from the separated brightness component in the *Lab* color space. To this end, the first extracting means 101b-1 perform the morphology processing A (i.e., the first morphology processing) on an image L corresponding to the brightness in the *Lab* color space that is obtained as a result of color space conversion that is performed by the separating means 101a to generate a candidate vessel image BH (Step S132a). In this regard, as the morphology processing is performed by applying structuring element(s) to an input image to generate the candidate vessel image BH as an output image having the same size as the input image, each value of the output image is based on comparison between the corresponding pixel and neighboring pixel(s) within the input image.

Most basic morphology processing is represented by dilation and erosion. The dilation is performed by adding a pixel to the boundary of the object within the input image, and the erosion is performed by removing a pixel from the boundary of the object. The number of the pixel(s) added to or removed from the object depends on a size and a shape of the structuring element used in the image processing.

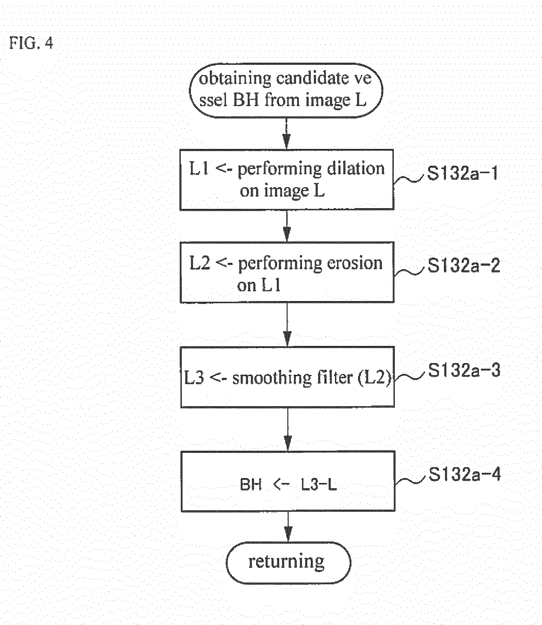

In this case, a process of how the morphology processing A is performed and the region selected as the object to be diagnosed (i.e., the candidate vessel) is extracted from the brightness component will be described. The detailed procedure of bottom-hat processing is illustrated in FIG. 4.

Referring to FIG. 4, the first extracting means 101b-1 perform the dilation on the image L to obtain a processed brightness image L1 (Step S132-1). The details of the dilation are described in, for example, internet URL (http://www.mathworks. co.jp/jp/help/images/morphology-fundamentals-dilation-and-erosion.html) (accessed on September 1, 2014)

Next, the first extracting means 101b-1 perform the erosion on the dilation-processed brightness image L1 to obtain an erosion-processed brightness image L2 (Step S132a-2). Subsequently, the first extracting means 101b-1 perform a smoothing filter processing on the erosion-processed brightness image L2 to obtain a smoothed brightness image L3 in which the brightness is smoothed (Step S132a-3). In this smoothing filter processing, Gaussian filter is used.

Smoothing using the Gaussian filter is represented by the following arithmetic equation:

$$f(x, y) = (1 / (2 \pi \sigma^2)) \exp(-(x^2 + y^2) / (2 \sigma^2))$$

In the Gaussian filter, weighting due to Gaussian distribution is used as the predetermined route. The degree of smoothing can be controlled by the size of $\sigma$ in the above arithmetic equation and realized by setting the predetermined value. Furthermore, the smoothing filter is not limited to the Gaussian filter, and other filters such as a median filter and a mean filter may be used. The bottom-hat processed image BH is obtained by subtracting the image L from the smoothed brightness image L3 (BH = L3 - L) (Step S132a-4).

The afore-mentioned processing is repeated predetermined times. When the predetermined times are completed, the image BH as thus obtained is a vessel-extracted image E. If the number of times does not reach the predetermined times, the processing such as the dilation (Step S132a-1) and the erosion (Step S132a-2) is repeatedly performed on the image BH as the image L.

The dilation is further explained. For example, the structuring element having a diameter of five dots is considered. The dilation means that the processing in which a maximum value of a notice pixel within the range of the structuring element(s) becomes a value of the notice pixel is performed on all the pixels. In other words, an output value of the notice pixel corresponds to the maximum value of all the pixels neighboring the input pixel. On the other hand, the erosion means that the processing in which a minimum value of a notice pixel within the range of the structuring element becomes a value of the notice pixel. In other words, the value of the notice pixel corresponds to the minimum value of all the pixels neighboring the input pixel. While the structuring element is a circular in this embodiment, it may be rectangular. However, the circular structuring element can lessen the degree of smoothing of the smoothing filter.

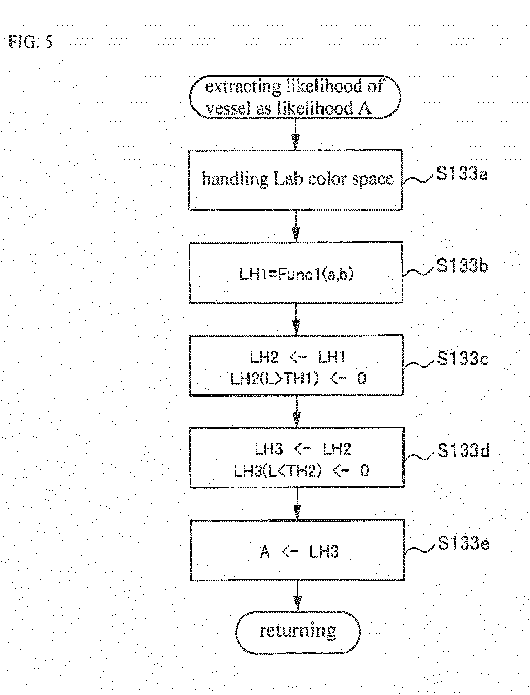

Returning to Fig. 3, the second extracting means 101b-2 of the processing unit 101 extract the likelihood of the selected region (i.e., the likelihood of vessel) based on the color space composed of the brightness component and the color information component. To this end, the second extracting means 101b-2 calculate the likelihood of vessel as the likelihood A (Step S133a). The likelihood A may be determined in accordance with, for example, the flow chart of FIG. 5.

Referring to FIG. 5, the second extracting means 101b-2 of the processing unit 101 perform an extraction using the value of an *a* axis that is the color information component corresponding to a direction of red-based color in the color space and the value of a *b* axis that is the color information component corresponding to a direction of blue-based color in the color space. In other words, the second extracting means 101b-2 perform the following operation using the value of *a* axis and the value of *b* axis of the *Lab* color space to generate LH1 (Step S133b).

$$ad = (a - ca) * \cos(r) + b * \sin(r) + ca$$

$$bd = - (a - ca) * \sin(r) + b * \cos(r)$$

$$LH1 = \exp(- ((ad * ad) / sa / sa + (bd * bd) / sb / sb))$$

In the above operation, "ad" and "bd" are obtained by rotating an ab plane in an extent of r radian(s) in a counterclockwise direction around (ca, 0). In this regard, the value of "r" may be within the range from 0.3 radian to 0.8 radian. The value of "ca" may be within the range from 0 to 50. The "sa" and "sb" are a reciprocal of the sensitivity in the *a* axis direction and a reciprocal of the sensitivity in the *b* axis direction, respectively. In this embodiment, "sa" is greater than "sb". Furthermore, in the above operation, "*" means multiplication between elements of a matrix.

Next, the second extracting means 101b-2 put a restriction on the resulting LH1 with the brightness *L.* If the brightness *L* is a threshold TH1 or above, LH1 (L=0) becomes LH2 (Step S133c). If the brightness L is the threshold TH2 or below, the LH2 becomes LH3 (Step S133d). The threshold TH1 is a value of range from 60 to 100, and the threshold TH2 is a value of range from 0 to 40. The LH3 as thus obtained becomes the likelihood A indicating the likelihood of vessel (Step S133e).

Returning to FIG. 3, after extracting the likelihood of vessel as the likelihood A in accordance with the afore-mentioned procedure (Step S133a), the second extracting means 101b-2 multiply the bottom-hat processed image BH by each element of the likelihood A indicating the likelihood of vessel, and divide the result by a coefficient N (Step S134a). Further, the highlighted, vessel-extracted image E is generated by clipping with 1 (Step S135a).

In accordance with the embodiment, the vessel-extracted image E is a multivalued image having a value of the range from 0 to 1. However, as the vessel-extracted image E has been subjected to the bottom-hat processing, the boundary of the extracted vessel becomes steep. If the steeper boundary is desired, binarization with a desired threshold may be performed.

As described previously, the second extracting means 101b-2 calculates the likelihood A indicating the likelihood of vessel of the selected region by rotating plane coordinates which are composed of the red-based color direction and the blue-based color direction of the color space in an extent of predetermined angle in a counterclockwise direction about a predetermined point on the axis of the red-based color direction, and putting a restriction on the brightness component with the predetermined range of the value. The selected region is highlighted by multiplying the brightness image that is obtained by performing the bottom-hat processing on the image of the brightness component by the likelihood A as calculated.

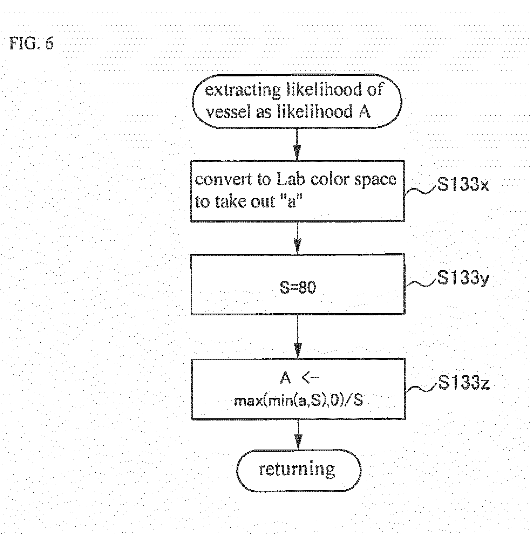

A modified embodiment that the likelihood of vessel is extracted as the likelihood A is described with reference to the flow chart of FIG. 6. The extracting means acquire the value of an *a* axis that corresponds to a direction of red-based color in *Lab* color space (Step S133x), and set the value of the likelihood of vessel (i.e., the likelihood A) within the range of from 0 to 1 via normalization (A←max(min(a, S), 0)/S) with the limited range of from 0 to 80 (Step S133z). In this embodiment, the value of likelihood A is subjected to limitation of the value of from 0 to 80 by applying, for example, 80 to S (Step S133y). However, the above value is only non-restrictive example.

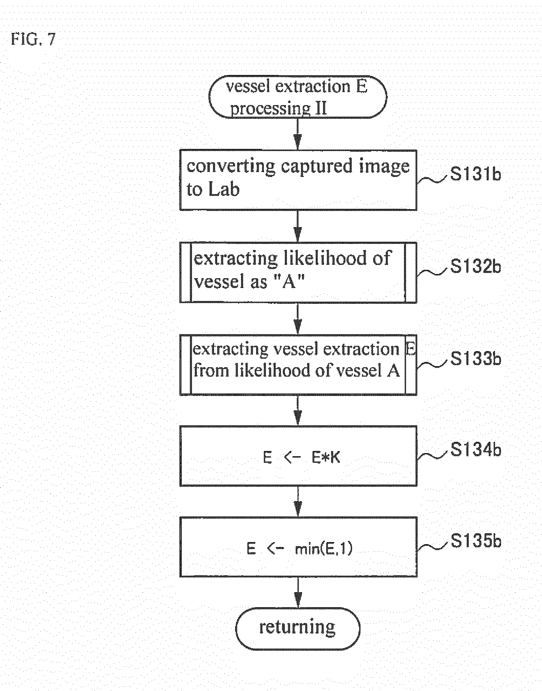

Next, a method for directly extracting the vessel from the color information is described with reference to the flowchart of FIGS. 7 and 8. In the following description, an image of the likelihood of vessel is generated from the color information, and the vessel is extracted due to an improved top-hat processing that is also referred to as a "morphology processing B". Furthermore, in the image of the likelihood of vessel greater likelihood means greater value of the image.

In the morphology processing A as shown in FIG. 4 the dilation is performed on a source image, and then the erosion is performed the image as thus obtained. The processing in which the dilation and the erosion are repeatedly performed the same times is referred to as closing. In other words, with the diagnosis support apparatus 100 in accordance with the first embodiment of the invention, the smoothing filter processing is performed on the closing-processed image, and the image as thus obtained is subtracted from the source image (i.e., black-hat processing). In this regard, the source image is the brightness image L, and the value of the image in the vessel is made relatively low. As such, when a shape the value of which is low in the image is intended to extract, the morphology processing A as shown in FIG. 4 is used.

The vessel extraction E processing II using the morphology B is hereinafter described. Referring to FIG. 7, the separating means 101a of the processing unit 101 firstly convert the captured image from RGB color space into the *Lab* color space (Step S131b). Next, the second extracting means 101b-2 of the processing unit 101 extract the likelihood of the selected region (i.e., the likelihood of vessel) based on the separated color information component in the *Lab*

color space. To this end, the second extracting means 101b-2 calculate the likelihood of vessel as the likelihood A (Step S132b). The likelihood A can be determined as described above in connection with FIGS. 5 and 6.

Subsequently, the second extracting means 101-b acquire the vessel-extracted image E from the image A indicating the likelihood of vessel (i.e., the image A of the likelihood of vessel) (Step S133b). The procedure of acquiring the vessel-extracted image E from the image A of the likelihood of vessel (i.e., the likelihood of vessel image A) is shown in FIG. 8.

Referring to FIG. 8, the second extracting means 101b-2 cause proper structuring element(s) to perform erosion processing on the image A of the likelihood of vessel to obtain the erosion-processed image A1 of the likelihood of vessel (Step S133b-1). Next, the erosion-processed image A1 of the likelihood of vessel is subjected to dilation processing to obtain a dilation-processed image A2 of the likelihood of vessel (Step S133b-2). The second extracting means 101b-2 further perform the smoothing filter processing (i.e., Gaussian filtering) on the image A2 of the likelihood of vessel having undergone the dilation processing to obtain smoothing-processed image A3 of the likelihood of vessel (Step S133b-3). Ultimately, the smoothing-processed image A3 of the likelihood of vessel is subtracted from the image A of the likelihood of vessel to obtain the vessel-extracted image E (Step S133b-4).

As described previously, the erosion is performed on the source image (i.e., the image A of the likelihood of vessel) and then the dilation is performed on the image as thus obtained to obtain the opening-processed image. The second extracting means 101b-2 perform on the smoothing filter processing on the opening-processed image, and subtract the opening-processed image from the source image (i.e., the top-hat processing), thereby extracting the shape of the vessel out of the source image. In this regard, as the source image is the image of likelihood of vessel, the value of the image looking like the vessel is made high.

Returning to FIG. 7, after obtaining the vessel-extracted image E from the image A of the likelihood of vessel, the second extracting means 101b-2 multiply the vessel-extracted image E by proper coefficient N (Step S134b), and perform clipping processing with 1 to generate a highlighted, vessel-extracted image E (Step S135b).

As described previously, as the diagnosis support apparatus 100 in accordance with the first embodiment of the invention achieves the shape from the multivalued images, in the case of achieving a shape, the value of which is high in the image, it performs smoothing filter processing on the closing-processed image and subtracts the source image from the image as thus obtained to obtain the vessel-extracted image E. On the other hand, in the case of obtaining a shape, the value of which is low in the image, the diagnosis support apparatus 100 in accordance with the first embodiment of the invention performs the smoothing filter processing on the opening-processed image and subtracts the image as thus obtained from the source image to obtain the vessel-extracted image E. In this regard, the opening processing is defined by a processing in which the erosion and the dilation are performed once or multiple times in this order, and the closing processing is defined by a processing in which the dilation and the erosion are performed once or multiple times in this order. In both of the opening processing and the opening processing, the shape of the structuring element used is preferably circular. The smoothing filter which can be employed in the embodiment includes, but not limited to, a Gaussian filter, a mean filter, a median filter, and etc.

The afore-mentioned diagnosis support apparatus 100 can be used in order to acquire the shape with the thermoscope. In this case, the vessel shape is extracted from the brightness image and/or the image of the likelihood of the vessel, thereby allowing for secure shape acquisition without being accompanied by any false pattern such as a moire even in the case of acquisition of the vessel having any irregular shape or a shape, the value shift of which is relatively great or high. Therefore, the diagnosis support apparatus 100 can help a physician to make easy and correct diagnosis.

[Second Embodiment]

While the first embodiment uses the dermoscopic image of the cutaneous lesion, the invention can be applied to the captured image of legions other than the cutaneous legion. The second embodiment in which the captured image of fundus is used will be hereinafter described.

Since a fundus image examination can be done conveniently at a relatively modest cost, it is widely used in a health diagnosis or a medical checkup. Fundus image examination can be done by the observation of the fundus located behind a pupil through a lens by use of a fundus camera or a fundus mirror, and is a method for examining a blood vessel, a retina, and an optic nerve of the fundus in a non-invasive manner. The fundus image examination is used for the examination of eye diseases such as a retinal detachment, a fundus hemorrhage, and a glaucoma. Moreover, since a fundus vessel is an only portion of a human body where a vessel can be directly observed, diseases of a whole body such as a hypertension, which is one of diseases of blood circulatory system, an arteriosclerosis, and a brain tumor can be speculated based on the observation of the fundus vessel. For the reasons, the fundus image examination is an effective tool for the examination of lifestyle-related diseases.

A diagnosis support apparatus 100 in accordance with the second embodiment of the invention has the same configuration as the diagnosis support apparatus 100 in accordance with the first embodiment of the invention except that the thermoscope-equipped image-capturing device 110 is replaced with a fundus camera 110.

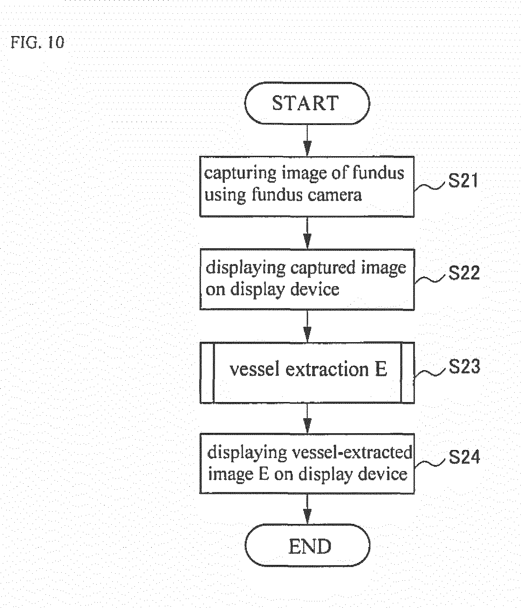

The operation of the diagnosis support apparatus 100 in accordance with the second embodiment of the invention is basically similar to that of the diagnosis support apparatus 100 in accordance with the first embodiment of the invention, and the difference(s) between the diagnosis support apparatus 100 in accordance with the first embodiment and the diagnosis support apparatus 100 in accordance with the second embodiment will be hereinafter described with reference to FIGS. 10-12.

FIG. 10, which corresponds to FIG. 2 with respect to the first embodiment, depicts the flow of basic processing operation of the diagnosis support apparatus 100 in accordance with the second embodiment of the invention. The processing unit 101 firstly acquires a fundus image I that is captured by the fundus camera 110 (Step S21). Then, the captured image I as acquired is memorized in the predetermined area of the image-memorizing unit 102, and is displayed on the display device 120 (Step S22). Subsequently, the processing unit 101 performs vessel extraction E processing on the captured image I (Step S23) and highlighting processing on the extracted vessel as thus obtained. The highlighting-processed image as thus obtained and the captured image I as previously displayed are displayed in parallel on the display device 120. Diagnosis is left to a physician (Step S24).

In the captured image I of the fundus, the reflective strength of the vessel is weaker than the surrounding, and the value thereof is relatively low. While the fundus camera 110 generally provides a monochromic image, such monochromic image (i.e., a brightness image) may be generated by a color camera.

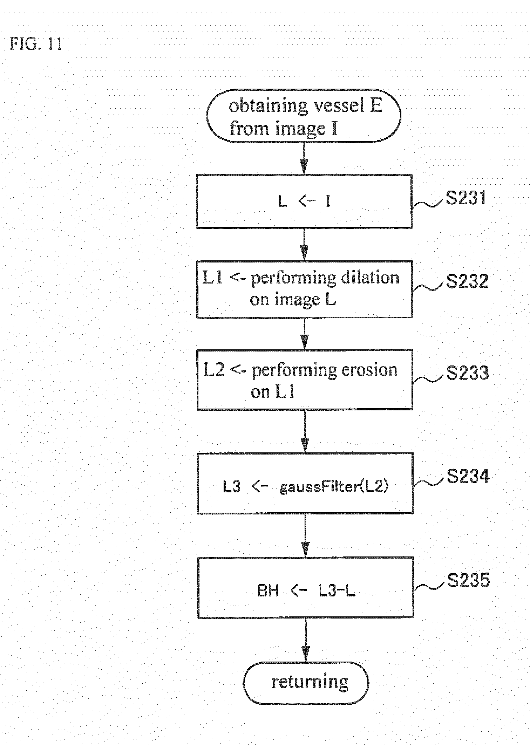

FIG. 11, which corresponds to FIG. 4 of the first embodiment, depicts the flow for obtaining the vessel-extracted image E from the captured image I. Firstly, the captured image I of the fundus is an image L (Step S231). Subsequently, the first extracting means 101b-1 perform the dilation processing on the image L to obtain a processed brightness image L1 (Step S232).

Next, the first extracting means 101b-1 perform the erosion processing on the dilation-processed brightness image L1 to obtain an erosion-processed brightness image L2 (Step S233). Subsequently, the first extracting means 101b-1 perform the smoothing filter processing on the erosion-processed brightness image L2 to obtain a smoothed brightness image L3 (Step S234). In this regard, the smoothing may be performed by Gaussian filter. The details of the Gaussian filter is described above in connection with the first embodiment. Bottom-hat processed image BH is obtained by subtracting the image L from the smoothed brightness image L3 (BH = L3- L) (Step S235).

The afore-mentioned processing is repeatedly performed predetermined times. If the afore-mentioned processing is completed, the image BH as thus obtained is a vessel-extracted image E. Under the predetermined times the image BH as the image L is repeatedly subjected to the dilation processing (Step S232), the erosion processing (Step S233), and etc.

In the above embodiment, as shown in FIG. 11, as the value of the vessel of the captured image I is smaller than that of the surrounding, the bottom-hat processing accompanied by the smoothing filter processing can be used. To the contrary, in a case where the captured image in which the value of the vessel is greater than that of the surroundings, the top-hat processing accompanied by the smoothing filter processing can be used, as illustrated in FIG. 8 in connection with the first embodiment.

In order to obtain the captured image of the fundus, scanning laser ophthalmoscope (SLO) may be used instead of the afore-mentioned fundus camera 110. In this case, the bottom-hat processing accompanied by the smoothing filter processing may be preferably used.

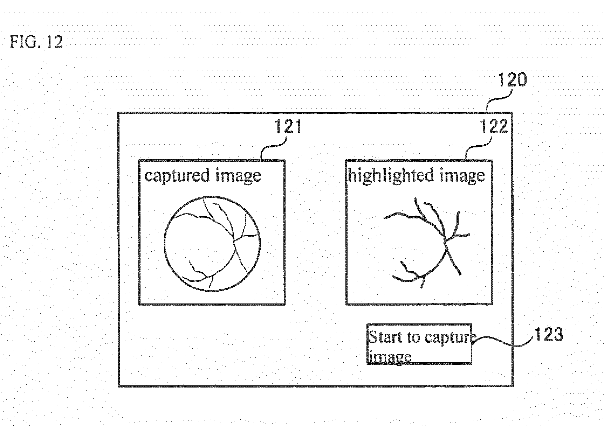

FIG. 12 shows an exemplary display screen configuration of a diagnosis support apparatus 120 in accordance with the second embodiment. In the screen of FIG. 12, a captured image-displaying section 121 in which the captured image is shown is arranged at a left side, and a highlighted image-displaying section 122 in which the highlighted image of the vessel is shown is arranged at a right side. Due to the processing unit 101's vessel extraction processing, the captured image and the highlighted image in which the extracted vessel is highlighted out of the captured image are respectively displayed in parallel in the captured image-displaying section 121 and the highlighted image-displaying section 122 of the display device 120. This configuration is the same as the first embodiment except that the image of the affected area is captured by the fundus camera 110.

[Third embodiment]

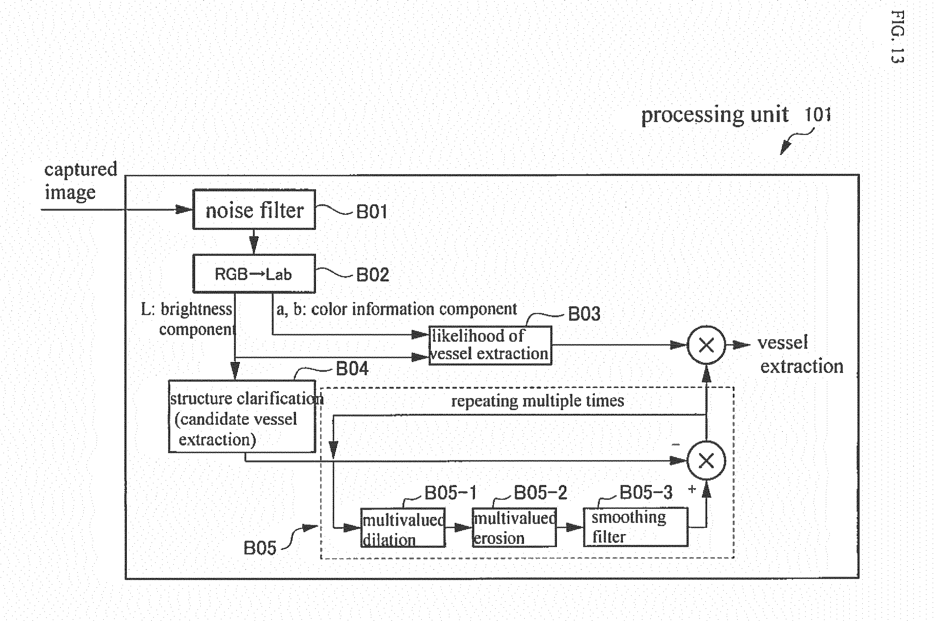

In a third embodiment, the processing unit 101 is further provided with clarifying means 101c. While the third embodiment may be applied to both of the first embodiment and the second embodiment, an example of applying the clarifying means to the first embodiment will be hereinafter described. The basic processing operation of the processing unit 101 of the diagnosis support apparatus 100 will be described with reference to the flowchart of FIG. 13

The clarifying means 101c as shown in FIG. 13 function as means of performing clarification processing on a brightness component using high dynamic range imaging (HDR).

While the shape of the vessel can be clearly and sharply extracted by the candidate vessel-extracting processing based on the morphology processing using the afore-mentioned bottom-hat processing or top-hat processing, false patterns such as a moire may occur when the extraction of an irregular vessel or a faint (blur) vessel which only slightly appears. In view of the above, in this embodiment, in order to extract the vessel appearing as only slight change in the captured image, the clarification processing is followed by the processing such as the afore-mentioned morphology processing. In this regard, the clarification processing is defined by a processing that subtle change is marked while obtaining the same effect as achieved by HDR. In other words, the vessel which is only slightly recognized in the image is bulged in a predetermined amount, and is then subjected to the processing such as the morphology processing. As a result, the vessel can be clearly and sharply extracted.

High dynamic range imaging (HDR) is a sort of photograph techniques for expressing a wider dynamic range compared to conventional photography. In a normal photographing, the dynamic range is narrower than a human eye. That is, even in a case where the same object as is visible to the human eye is photographed, the object cannot be recorded in the same manner as is visible to the human eye. Since the dynamic range is narrow, the contrast is significantly reduced in either or both of a bright place and a dark place, and the image with the significantly reduced contrast is recorded. As the contrast is reduced, the change is hard or hardly to recognize. In view of the above, HDR is a technology that three shots are taken under three different exposures including, for example, an exposure tailored to bright place, another exposure tailored to middle-grade bright place, and a still another exposure tailored to a dark place, and combined with each other, thereby widening the dynamic range. The image thus obtained is recorded. Due to HDR the capture image can be recorded on the impression that is close to the human eye.

Referring to FIG. 13, the processing unit 101 performs a noise-filter processing on a captured image (i.e., a dermoscopic image) to be diagnosed (Block B01), and then converts the captured image from RGB color space that is a color space of the original image to *Lab* color space (Block B02). Next, the processing unit 101 separates the *Lab* color space into a brightness component *L,* and color information components *a* and *b;* extracts the brightness component, or the color information component of a selected region; combines the extracted image with a HDR-processed image, which will be described below, to generate a vessel-highlighted image, which is displayed on the display device 120, as shown in, for example, FIG. 9.

The clarifying means 101c of the processing unit 101 perform the clarification processing based on HDR using the image L which corresponds to the brightness component in the *Lab* color space (Block B04: structure clarification), and perform the morphology processing on the clarification-processed image L to extract the shape of the vessel (Block B05). At the same time, the morphology processing is also performed on the color information components *a* and *b* to extract an image of likelihood of vessel (Block B03: extraction of likelihood of vessel).

The processing unit 101 performs the morphology processing on the opening-processed image of the likelihood of vessel having undergone the smoothing filter processing, as well as, an image that is obtained by subtracting the brightness image from the closing-processed image of the brightness component having undergone the smoothing filter processing (Block B05-3). In this regard, the opening processing is defined by a processing in which the erosion and the dilation are performed once or multiple times in this order, and the closing processing is defined by a processing in which the dilation (B05-1: multivalued dilation) and the erosion (B05-2: multivalued erosion) are performed once or multiple times in this order, as shown in FIG. 13. The smoothing filter which can be employed in the embodiment may be a Gaussian filter, as mentioned previously.

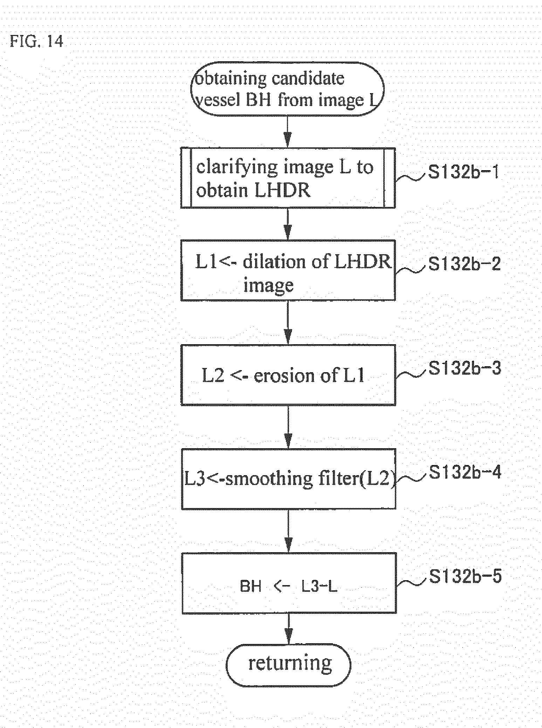

The clarification processing is performed on one piece of image, and HDR image is also obtained from one piece of captured image. A method of obtaining HDR image from one piece of image includes the steps of obtaining a base component image using by means of a component separation filter composed of an edge preserving smoothing filter; and attenuating the base component image to obtain reconstructed image. During the candidate vessel extraction processing as shown in FIG. 4 (i.e., generating the candidate vessel BH from the image L) the image L can be subjected to the clarification processing to obtain LHDR image, the flow of which is provided in FIG. 14.

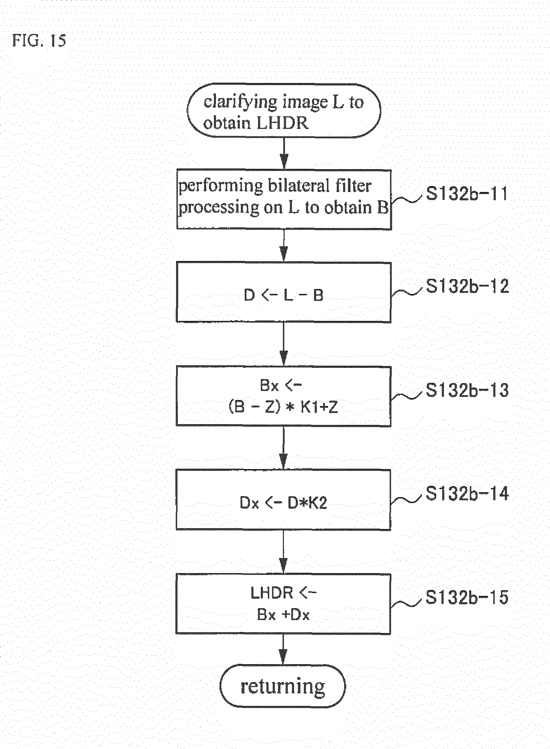

Referring to FIG. 14, the processing (Step S132b-2 - S143b-5) other than the processing of generating LHDR image (Step S132b-1) as the first step is the same as the processing of generating the candidate vessel BH from the image L based on the bottom-hat processing (Steps S132-1 - S132a-4) as shown in FIG. 4. Accordingly, unnecessary overlapping description is omitted. The clarification processing for obtaining LHDR image as shown in Step S132b-1 is performed by the processing unit 101 (a first processing module) as shown in FIG. 1, and the first processing module has clarifying means of performing the clarification processing on the original image. The flow of the clarification processing performed by the clarifying means 101c will be hereinafter described with reference to the flow chart of FIG. 15.

Referring to FIG. 15, the clarifying means 101c firstly perform the filtering processing on the image L to obtain a base component image (image B) (Step S132b-11). During the filtering processing a component separation filter composed of a bilateral filter which is an edge preserving smoothing filter is used. Subsequently, the clarifying means 101c subtract the image B from the image L to obtain the detail component image (image D) (Step S132b-12). Next, an offset Z is subtracted from the image B and the result as thus obtained is amplified by a coefficient K1 to obtain an image Bx (Step S132b-13). In this regard, the effect of HDR can be attained on a condition of K1 < 1. Subsequently, due to the clarifying means 101c the image D is amplified by a coefficient K2 to obtain an image Dx, and the image D is amplified to highlight subtle change of the shape on the proviso that K2 is 1 or above (Step S132b-14).

The clarifying means 101c finally add the image B to the image Dx to obtain LHDR image, and deliver the LHDR image to the first extracting means 101b-1 (Step S132-15). The first extracting means 101b-1 having received the LHDR image performs the vessel extraction processing on the LHDR image based on the bottom-hat morphology processing, as described above and provided in Step S132a-1 - S132a-4 of FIG. 4 and Step S132b-2 - S132b-5 of FIG. 14.

As mentioned previously, in accordance with the third embodiment, the processing unit 101 (the first processing module) performs the clarification processing on the original image, and then performs the candidate vessel extraction processing on the resulting image based on the morphology processing, thereby allowing for secure acquisition of the vessel appearing as only slight change in the captured image, without being accompanied by any false pattern even in the case of acquisition of the vessel having any irregular shape or a shape, the value shift of which is relatively great or high. Therefore, the shape of the vessel can be clearly and sharply extracted.

Moreover, the clarification processing as shown in FIG. 15 is only non-restrictive example. As the clarification processing which can be used in this embodiment, a clarification method including the steps of separating a brightness component into a base component and a detail component using the component separation filter, and performing contrast-highlighting processing on the base component brightly, as described in Japanese Patent Application No. 2014-227528 and a method for clarifying an original image by combining the processed results processed by two component separation filters having properties different from each other, as described in Japanese Patent Application No. 2015-054328 may be considered. These belong to clarification using the brightness image L. These two patent applications have been filed by the same applicant. Furthermore, a method for clarifying the original image including performing highlighting process in consideration of the likelihood of vessel of the detail component, as described in Japanese Patent Application No. 2014-227530 may be considered. This belongs to the clarification using color information as well as the brightness **L**. Accordingly, the afore-mentioned clarifications alone or in combination may be performed in the embodiment.

[Effect of Embodiment]

As described previously, according to the diagnosis support apparatus 100 in accordance with the first embodiment of the invention, the first extracting means 101b-1 of the processing unit 101, based on the brightness component and the color information component of the captured image separated by the separating means 101a, extract the candidate region using the first morphology processing based on the brightness component (FIG. 3), and the second extracting means 101b-2 of the processing unit 101 extract the likelihood of the region from the color space composed of the brightness component and the color information component and perform the second morphology processing (FIG. 7) to generate a region-extracted image, which is displayed on the display device 120. In this case, since the morphology processing including the smoothing filter processing is performed on the extracted candidate region and likelihood of the region (FIGS. 4 and 7), the shape can be securely acquired without being accompanied by any false pattern even in the case of acquisition of any irregular shape or a shape, the value shift of which is relatively great or high. For the reasons, the physician can visually check a screen on which the region to be diagnosed is highlighted, thereby causing the physician to make an easy and correct diagnosis. As a result, diagnostic accuracy is improved. The same logic can be applied to the diagnosis support apparatus 100 in accordance with the second embodiment. In the case of the diagnosis support apparatus 100 in accordance with the third embodiment, HDR is performed on the brightness component by the clarifying means 101c prior to the morphology processing, thereby allowing for a further highlighted image for diagnosis.

**REFERENCE SIGNS LIST**

100...diagnosis support apparatus; 101...processing unit; 101a...separating means; 101b...extracting means (101b-1 first extracting means; 101b-2 second extracting means); 101c...clarifying means; 110...dermoscope-equipped, image-capturing device; 120...display device; 121...captured image-displaying section; 122...highlighted image-displaying section; 130...input device

**Claims**

1. A diagnosis support apparatus for diagnosing a lesion based on a captured image composed of a multi-valued image, comprising:

   a processing unit configured to process the captured image as an original image,
   **characterized in that** the processing unit comprises:

a separating unit (101a) configured to separate the captured image into a brightness component and a color information component;
first extracting means (101b-1); and
second extracting means (101b-2); wherein

the first extracting means (101b-1) are adapted to perform a first morphology processing which performs a bottom hat processing, wherein the bottom hat processing includes a dilation, an erosion, a smoothing filter processing and a subtraction processing in this order with respect to an image (L) representing the brightness component, to generate a first image (BH), wherein the first extracting means (101b-1) are used to perform the first morphology processing when acquiring a shape of regions having low pixel values from the image (L) representing the brightness component; and the image obtained as a result of the first morphology processing is extracted as a candidate region (BH); and
the second extracting means (101b-2) are adapted to perform a second morphology processing which performs a top hat processing, wherein the top hat processing includes an erosion, a dilation, a smoothing filter processing, and a subtraction processing in this order with respect to an image (A) indicating a likelihood of a region obtained from a color space composed of the brightness component and the color information component to extract a second image (E), wherein the second extracting means are used to perform the second morphology processing, when acquiring a shape of regions having high pixel values from the image (A) indicating the likelihood region, and the image obtained as a result of the second morphology processing is extracted as a likelihood image (E) of a region.

2. The diagnosis support apparatus according to claim 1, wherein

the processing unit performs the first morphology processing and/or the second morphology processing, wherein the first morphology processing comprises a closing processing where the dilation and the erosion are performed on the image (L) in this order;
the smoothing filter processing is performed on the closing-processed image (L2); and
the image (L) is subtracted from the smoothing filter-processed image (L3) in the subtraction processing; and wherein the second morphology processing comprises an opening processing where the erosion and the dilation are performed on the image (A) in this order;
the smoothing filter processing is performed on the opening-processed image (A2); and
the smoothing filter-processed image (A3) is subtracted from the image (A) in the subtraction processing.

3. The diagnosis support apparatus according to claims 1 or 2, wherein

the first extracting means (101b-1) further comprise clarifying means (101c) of performing a clarification processing on the original image, and wherein
the first extracting means (101b-1) are adapted to extract the candidate region based on the clarification-processed original image.

4. The diagnosis support apparatus according to claim 3, wherein the clarifying means (101c) are adapted to perform the clarification processing based on HDR.

5. A method for processing an image in a diagnosis support apparatus for diagnosing a lesion based on a captured image composed of a multi-valued image, comprising the step of:

separating the captured image into a brightness component and a color information component; wherein
when acquiring a shape of regions having low pixel values from the image (L) representing the brightness component, the method further comprises performing a first morphology processing which performs a bottom hat processing,
wherein the bottom hat processing includes a dilation, an erosion, a smoothing filter processing and a subtraction processing in this order with respect to the image (L) representing the brightness component, to generate a first image (BH); and extracting the image obtained as a result of the first morphology processing as a candidate region (BH); and
when acquiring a shape of regions having high pixel values from an image (A) indicating a likelihood region, the method further comprises
performing a second morphology processing which performs a top hat processing, wherein the top hat processing includes an erosion, a dilation, a smoothing filter processing, and a subtraction processing in this order with respect to the image (A) indicating a likelihood of a region obtained from a color space composed of the brightness component and the color information component to extract a second image (E); and

extracting the image obtained as a result of the second morphology processing as a likelihood image (E) of a region.

**6.** The image processing method according to claim 5, wherein

the first morphology processing and/or the second morphology processing are performed;

the first morphology processing comprises a closing processing where the dilation and the erosion are performed on the image (L) in this order;

the smoothing filter processing is performed on the closing-processed image (L2); and

the image (L) is subtracted from the smoothing filter-processed image (L3) in the subtraction processing; and

the second morphology processing comprises an opening processing where the erosion and the dilation are performed on the image (A) in this order;

the smoothing filter processing is performed on the opening-processed image (A2); and

the smoothing filter-processed image (A3) is subtracted from the image (A) in the subtraction processing.

**7.** A program of processing an image in a diagnosis support apparatus for acquiring a shape from a multivalued image as an original image, the program **characterized by** causing a computer to execute the steps of the method according to claim 5 or 6.

## Patentansprüche

**1.** Diagnose-Unterstützungsvorrichtung zum Diagnostizieren einer Läsion auf Basis eines aufgenommenen Bildes, das aus einem mehrwertigen Bild (multivalued image) besteht, umfassend:

eine Verarbeitungs-Einheit, die so ausgeführt ist, dass sie das aufgenommene Bild als ein Originalbild verarbeitet, **dadurch gekennzeichnet, dass** die Verarbeitungs-Einheit umfasst:

eine Trenn-Einheit (101a), die so ausgeführt ist, dass sie das aufgenommene Bild in eine Helligkeits-Komponente und eine Farbinformations-Komponente trennt;

eine erste Extrahiereinrichtung (101b-1); sowie

eine zweite Extrahiereinrichtung (101b-2); wobei

die erste Extrahiereinrichtung (101b-1) so eingerichtet ist, dass sie eine erste Morphologie-Verarbeitung durchführt, mit der eine Top-Hat-Verarbeitung durchgeführt wird, wobei die Top-Hat-Verarbeitung eine Dilatation, eine Erosion, eine Glättungsfilter-Verarbeitung sowie eine Subtraktions-Verarbeitung in dieser Reihenfolge in Bezug auf ein Bild (L) einschließt, das die Helligkeits-Komponente darstellt, um ein erstes Bild (BH) zu erzeugen, wobei die erste Extrahiereinrichtung (101b-1) dazu dient, die erste Morphologie-Verarbeitung durchzuführen, wenn eine Form von Bereichen mit niedrigen Pixelwerten aus dem Bild (L) erfasst wird, das die Helligkeits-Komponente darstellt, und das als ein Ergebnis der ersten Morphologie-Verarbeitung gewonnene Bild als ein Kandidatenbereich (BH) extrahiert wird; und

die zweite Extrahiereinrichtung (101b-2) so eingerichtet ist, dass sie eine zweite Morphologie-Verarbeitung durchführt, mit der eine Top-Hat-Verarbeitung durchgeführt wird, wobei die Top-Hat-Verarbeitung eine Erosion, eine Dilatation, eine Glättungsfilter-Verarbeitung und eine Subtraktions-Verarbeitung in dieser Reihenfolge in Bezug auf ein Bild (A) einschließt, das eine Wahrscheinlichkeit eines Bereiches anzeigt, der aus einem aus der Helligkeits-Komponente und der Farbinformations-Komponente bestehenden Farbraum gewonnen wird, um ein zweites Bild (E) zu extrahieren, wobei die zweite Extrahiereinrichtung dazu dient, die zweite Morphologie-Verarbeitung durchzuführen, wenn eine Form von Bereichen mit hohen Pixelwerten aus dem Bild (A) erfasst wird, das den Wahrscheinlichkeits-Bereich anzeigt, und das als ein Ergebnis der zweiten Morphologie-Verarbeitung gewonnene Bild als ein Wahrscheinlichkeits-Bild (E) eines Bereiches extrahiert wird.

**2.** Diagnose-Unterstützungsvorrichtung nach Anspruch 1, wobei

die Verarbeitungs-Einheit die erste Morphologie-Verarbeitung und/oder die zweite Morphologie-Verarbeitung durchführt, wobei

die erste Morphologie-Verarbeitung eine Schließungs-Verarbeitung umfasst, bei der die Dilatation und die Erosion an dem Bild (L) in dieser Reihenfolge durchgeführt werden;
die Glättungsfilter-Verarbeitung an dem Schließungs-Verarbeitung unterzogenen Bild (L2) durchgeführt wird; und
das Bild (L) bei der Subtraktions-Verarbeitung von dem Glättungsfilter-Verarbeitung unterzogenen Bild (L3) subtrahiert wird; und
wobei die zweite Morphologie-Verarbeitung eine Öffnungs-Verarbeitung umfasst, bei der die Erosion und die Dilatation an dem Bild (A) in dieser Reihenfolge durchgeführt werden;
die Glättungsfilter-Verarbeitung an dem Öffnungs-Verarbeitung unterzogenen Bild (A2) durchgeführt wird; und
bei der Subtraktions-Verarbeitung das Glättungsfilter-Verarbeitung unterzogene Bild (A3) von dem Bild (A) subtrahiert wird.

3.  Diagnose-Unterstützungsvorrichtung nach Anspruch 1 oder 2, wobei

    die erste Extrahiereinrichtung (101b-1) des Weiteren eine Klärungs-Einrichtung (101c) zum Durchführen einer Klärungs-Verarbeitung an dem Originalbild umfasst, und wobei
    die erste Extrahiereinrichtung (101b-1) so eingerichtet ist, dass sie den Kandidatenbereich auf Basis des Klärungs-Verarbeitung unterzogen Originalbildes extrahiert.

4.  Diagnose-Unterstützungsvorrichtung nach Anspruch 3, wobei die Klärungs-Einrichtung (101c) so eingerichtet ist, dass sie die Klärungs-Verarbeitung auf Basis von HDR durchführt.

5.  Verfahren zum Verarbeiten eines Bildes in einer Diagnose-Unterstützungsvorrichtung zum Diagnostizieren einer Läsion auf Basis eines aufgenommenen Bildes, das aus einem mehrwertigen Bild (multivalued image) besteht, wobei es die folgenden Schritte umfasst:

    Trennen des aufgenommenen Bildes in eine Helligkeits-Komponente und eine Farbinformations-Komponente; wobei,
    wenn eine Form von Bereichen mit niedrigen Pixelwerten aus dem Bild (L) erfasst wird, das die Helligkeits-Komponente darstellt, das Verfahren des Weiteren umfasst:

    Durchführen einer ersten Morphologie-Verarbeitung, mit der eine Top-Hat-Verarbeitung durchgeführt wird, wobei die Top-Hat-Verarbeitung eine Dilatation, eine Erosion, eine Glättungsfilter-Verarbeitung und eine Subtraktions-Verarbeitung in dieser Reihenfolge in Bezug auf das Bild (L) einschließt, das die Helligkeits-Komponente darstellt, um ein erstes Bild (BH) zu erzeugen; sowie
    Extrahieren des als ein Ergebnis der ersten Morphologie-Verarbeitung gewonnenen Bildes als einen Kandidatenbereich (BH); und

    wenn eine Form von Bereichen mit hohen Pixelwerten aus einem Bild (A) erfasst wird, das einen Wahrscheinlichkeits-Bereich anzeigt, das Verfahren des Weiteren umfasst:

    Durchführen einer zweiten Morphologie-Verarbeitung, mit der eine Top-Hat-Verarbeitung durchgeführt wird, wobei die Top-Hat-Verarbeitung eine Erosion, eine Dilatation, eine Glättungsfilter-Verarbeitung und eine Subtraktions-Verarbeitung in dieser Reihenfolge in Bezug auf das Bild (A) einschließt, das eine Wahrscheinlichkeit eines Bereiches anzeigt, der aus einem aus der Helligkeits-Komponente und der Farbinformations-Komponente bestehenden Farbraum gewonnen wird, um ein zweites Bild (E) zu extrahieren; sowie
    Extrahieren des als ein Ergebnis der zweiten Morphologie-Verarbeitung gewonnenen Bildes als ein Wahrscheinlichkeits-Bild (E) eines Bereiches.

6.  Diagnose-Unterstützungsverfahren nach Anspruch 5, wobei

    die erste Morphologie-Verarbeitung und/oder die zweite Morphologie-Verarbeitung durchgeführt werden/wird,
    die erste Morphologie-Verarbeitung eine Schließungs-Verarbeitung umfasst, bei der die Dilatation und die Erosion an dem Bild (L) in dieser Reihenfolge durchgeführt werden;
    die Glättungsfilter-Verarbeitung an dem Schließungs-Verarbeitung unterzogenen Bild (L2) durchgeführt wird; und
    das Bild (L) bei der Subtraktions-Verarbeitung von dem Glättungsfilter-Verarbeitung unterzogenen Bild (L3) subtrahiert wird; und
    die zweite Morphologie-Verarbeitung eine Öffnungs-Verarbeitung umfasst, bei der die Erosion und die Dilatation an dem Bild (A) in dieser Reihenfolge durchgeführt werden;
die Glättungsfilter-Verarbeitung an dem Öffnungs-Verarbeitung unterzogenen Bild (A2) durchgeführt wird; und
bei der Subtraktions-Verarbeitung das Glättungsfilter-Verarbeitung unterzogene Bild (A3) von dem Bild (A) subtrahiert wird.

**7.** Programm zum Verarbeiten eines Bildes in einer Diagnose-Unterstützungsvorrichtung zum Erfassen einer Form aus einem mehrwertigen Bild (multivalued image) als ein Originalbild, wobei das Programm **dadurch gekennzeichnet ist, dass** es einen Computer veranlasst, die Schritte des Verfahrens nach Anspruch 5 oder 6 auszuführen.

## Revendications

**1.** Appareil de soutien de diagnostic pour diagnostiquer une lésion selon une image capturée composée d'une image à plusieurs valeurs, comprenant :

une unité de traitement configurée pour traiter l'image capturée en tant qu'image d'origine,
**caractérisé en ce que** l'unité de traitement comprend :

une unité de séparation (101a) configurée pour séparer l'image capturée en un composant de luminosité et un composant d'informations de couleur ;
des premiers moyens d'extraction (101b-1) ; et
des deuxièmes moyens d'extraction (101b-2) ; dans lequel

les premiers moyens d'extraction (101b-1) sont adaptés pour exécuter un premier traitement de morphologie qui exécute un traitement en chapeau bas, dit « bottom hat », dans lequel le traitement en bottom hat inclut une dilatation, une érosion, un traitement de filtre de lissage et un traitement de soustraction dans cet ordre par rapport à une image (L) représentant le composant de luminosité, pour générer une première image (BH), dans lequel les premiers moyens d'extraction (101b-1) sont utilisés pour exécuter le premier traitement de morphologie lors d'une acquisition d'une forme de zones présentant des valeurs de pixel faibles issue de l'image (L) représentant le composant de luminosité ; et l'image obtenue en tant que résultat du premier traitement de morphologie est extraite en tant que zone candidate (BH) ; et
les deuxièmes moyens d'extraction (101b-2) sont adaptés pour exécuter un deuxième traitement de morphologie qui exécute un traitement en chapeau haut, dit « top hat », dans lequel le traitement en top hat inclut une érosion, du dilatation, un traitement de filtre de lissage et un traitement de soustraction dans cet ordre par rapport à une image (A) indiquant la probabilité d'une zone obtenue à partir d'un espace de couleur composé du composant de luminosité et du composant d'informations de couleur pour extraire une deuxième image (E), dans lequel les deuxièmes moyens d'extraction sont utilisés pour exécuter le deuxième traitement de morphologie, lors d'une acquisition d'une forme de zones présentant des valeurs de pixel élevées issue de l'image (A) indiquant une zone de probabilité, et l'image obtenue en tant que résultat du deuxième traitement de morphologie est extraite en tant qu'image de probabilité (E) d'une zone.

**2.** L'appareil de soutien de diagnostic selon la revendication 1, dans lequel

l'unité de traitement exécute le premier traitement de morphologie et/ou le deuxième traitement de morphologie, dans lequel
le premier traitement de morphologie comprend un traitement de fermeture où la dilatation et l'érosion sont exécutées sur l'image (L) dans cet ordre ;
le traitement de filtre de lissage est exécuté sur l'image traitée en fermeture (L2) ; et
l'image (L) est soustraite de l'image traitée par filtre de lissage (L3) dans le traitement de soustraction ; et
dans lequel le deuxième traitement de morphologie comprend un traitement d'ouverture où l'érosion et la dilatation sont exécutées sur l'image (A) dans cet ordre ;
le traitement de filtre de lissage est exécuté sur l'image traitée en ouverture (A2) ; et
l'image traitée par filtre de lissage (A3) est soustraite de l'image (A) dans le traitement de soustraction.

**3.** L'appareil de soutien de diagnostic selon la revendication 1 ou 2, dans lequel

les premiers moyens d'extraction (101b-1) comprennent en outre des moyens de clarification (101c) d'exécution d'un traitement de clarification sur l'image d'origine, et dans lequel

les premiers moyens d'extraction (101b-1) sont adaptés pour extraire la zone candidate selon l'image d'origine traitée par clarification.

4. L'appareil de soutien de diagnostic selon la revendication 3, dans lequel les moyens de clarification (101c) sont adaptés pour exécuter le traitement de clarification selon la technologie HDR.

5. Procédé de traitement d'une image dans un appareil de soutien de diagnostic pour diagnostiquer une lésion selon une image capturée composée d'une image à plusieurs valeurs, comprenant l'étape de :

séparation de l'image capturée en un composant de luminosité et un composant d'informations de couleur ; dans lequel

lors d'une acquisition d'une forme de zones présentant des valeurs de pixel faibles issue de l'image (L) représentant le composant de luminosité, le procédé comprend en outre

exécution d'un premier traitement de morphologie qui exécute un traitement en bottom hat,

dans lequel le traitement en bottom hat inclut une dilatation, une érosion, un traitement de filtre de lissage et un traitement de soustraction dans cet ordre par rapport à l'image (L) représentant le composant de luminosité, pour générer une premier image (BH) ; et

extraction de l'image obtenue en tant que résultat du premier traitement de morphologie en tant que zone candidate (BH) ; et

lors d'une acquisition d'une forme de zones présentant des valeurs de pixel élevées issue d'une image (A) indiquant une zone de probabilité, le procédé comprend en outre

exécution d'un deuxième traitement de morphologie qui exécute un traitement en top hat,

dans lequel le traitement en top hat inclut une érosion, une dilatation, un traitement de filtre de lissage et un traitement de soustraction dans cet ordre par rapport à l'image (A) indiquant la probabilité d'une zone obtenue à partir d'un espace de couleur composé du composant de luminosité et du composant d'informations de couleur pour extraire une deuxième image (E) ; et

extraction de l'image obtenue en tant que résultat du deuxième traitement de morphologie en tant qu'image de probabilité (E) d'une zone.

6. Le procédé de traitement d'image selon la revendication 5, dans lequel

le premier traitement de morphologie et/ou le deuxième traitement de morphologie sont exécutés ;
le premier traitement de morphologie comprend un traitement de fermeture où la dilatation et l'érosion sont exécutées sur l'image (L) dans cet ordre ;
le traitement de filtre de lissage est exécuté sur l'image traitée en fermeture (L2) ; et
l'image (L) est soustraite à l'image traitée par filtre de lissage (L3) dans le traitement de soustraction ; et
le deuxième traitement de morphologie comprend un traitement d'ouverture où l'érosion et la dilatation sont exécutées sur l'image (A) dans cet ordre ;
le traitement de filtre de lissage est exécuté sur l'image traitée en ouverture (A2) ; et
l'image traitée par filtre de lissage (A3) est soustraite de l'image (A) dans le traitement de soustraction.

7. Programme de traitement d'une image dans un appareil de soutien de diagnostic pour une acquisition d'une forme à partir d'une image à valeurs multiples en tant qu'image d'origine, le programme étant **caractérisé par** ce qu'il fait exécuter à un ordinateur les étapes du procédé selon la revendication 5 ou 6.

FIG. 1

FIG. 2

```
                    ┌──────────────┐
                    │    START     │
                    └──────┬───────┘
                           │
                           ▼
         ┌─────────────────────────────────┐
         │ capturing image with dermosc     │      S11
         │ ope-equipped, image-capturing    │─╮
         │ device                           │
         └─────────────────┬───────────────┘
                           │
                           ▼
         ┌─────────────────────────────────┐
         │ displaying captured image on     │      S12
         │ display device                   │─╮
         └─────────────────┬───────────────┘
                           │
                           ▼
         ┌┬───────────────────────────────┬┐
         ││ vessel extraction E            ││     S13
         ││ processing                     ││─╮
         └┴───────────────┬───────────────┴┘
                           │
                           ▼
         ┌─────────────────────────────────┐
         │ displaying processed-image on    │      S14
         │ the display device               │─╮
         └─────────────────┬───────────────┘
                           │
                           ▼
                    ┌──────────────┐
                    │     END      │
                    └──────────────┘
```

FIG. 3

```
              ╭──────────────────────╮
              │  vessel extraction E │
              │     processing I     │
              ╰──────────────────────╯
                         │
                         ▼
         ┌────────────────────────────────┐
         │ converting captured image to   │        S131a
         │ Lab                            │
         └────────────────────────────────┘
                         │
                         ▼
         ┌────────────────────────────────┐
         │ obtaining candidate vessel     │        S132a
         │ BH from Image L                │
         └────────────────────────────────┘
                         │
                         ▼
         ┌────────────────────────────────┐
         │ extracting likelihood of       │        S133a
         │ vessel as likelihood A         │
         └────────────────────────────────┘
                         │
                         ▼
         ┌────────────────────────────────┐
         │      E <- (BH.*A)/N            │        S134a
         └────────────────────────────────┘
                         │
                         ▼
         ┌────────────────────────────────┐
         │      E <- min(E,1)             │        S135a
         └────────────────────────────────┘
                         │
                         ▼
                 ╭───────────────╮
                 │   returning   │
                 ╰───────────────╯
```

FIG. 4

```
        ╭─────────────────────╮
        │ obtaining candidate ve │
        │ ssel BH from image L   │
        ╰─────────────────────╯
                   │
                   ▼
        ┌─────────────────────┐
        │ L1 <- performing dilation │  ～ S132a-1
        │      on image L         │
        └─────────────────────┘
                   │
                   ▼
        ┌─────────────────────┐
        │ L2 <- performing erosion │  ～ S132a-2
        │       on L1            │
        └─────────────────────┘
                   │
                   ▼
        ┌─────────────────────┐
        │ L3 <- smoothing filter (L2) │  ～ S132a-3
        └─────────────────────┘
                   │
                   ▼
        ┌─────────────────────┐
        │    BH  <-  L3-L         │  ～ S132a-4
        └─────────────────────┘
                   │
                   ▼
        ╭─────────────────────╮
        │      returning         │
        ╰─────────────────────╯
```

FIG. 5

```
         ┌──────────────────────────┐
         │  extracting likelihood of │
         │   vessel as likelihood A  │
         └──────────────────────────┘
                      │
                      ▼
      ┌────────────────────────────┐
      │  handling Lab color space  │──── S133a
      └────────────────────────────┘
                      │
                      ▼
      ┌────────────────────────────┐
      │       LH1=Func1(a,b)        │──── S133b
      └────────────────────────────┘
                      │
                      ▼
      ┌────────────────────────────┐
      │        LH2 <- LH1           │
      │      LH2(L>TH1) <- 0        │──── S133c
      └────────────────────────────┘
                      │
                      ▼
      ┌────────────────────────────┐
      │        LH3 <- LH2           │
      │      LH3(L<TH2) <- 0        │──── S133d
      └────────────────────────────┘
                      │
                      ▼
      ┌────────────────────────────┐
      │         A <- LH3           │──── S133e
      └────────────────────────────┘
                      │
                      ▼
            ┌──────────────────┐
            │    returning     │
            └──────────────────┘
```

FIG. 6

extracting likelihood of
vessel as likelihood A

convert to Lab color space
to take out "a"　　　　　　S133x

S=80　　　　　　S133y

A <−
max(min(a,S),0)/S　　　　S133z

returning

FIG. 7

```
        ┌──────────────────────┐
        │  vessel extraction E │
        │    processing II     │
        └──────────┬───────────┘
                   │
                   ▼
        ┌──────────────────────┐
        │ converting captured image │   ～ S131b
        │ to Lab               │
        └──────────┬───────────┘
                   │
                   ▼
        ┌──────────────────────┐
        │ extracting likelihood of │  ～ S132b
        │ vessel as "A"        │
        └──────────┬───────────┘
                   │
                   ▼
        ┌──────────────────────┐
        │ extracting vessel extraction E │ ～ S133b
        │ from likelihood of vessel A │
        └──────────┬───────────┘
                   │
                   ▼
        ┌──────────────────────┐
        │      E <- E*K        │   ～ S134b
        └──────────┬───────────┘
                   │
                   ▼
        ┌──────────────────────┐
        │    E <- min(E,1)     │   ～ S135b
        └──────────┬───────────┘
                   │
                   ▼
        ┌──────────────────────┐
        │      returning       │
        └──────────────────────┘
```

FIG. 8

vessel extraction E from likelihood of vessel A

A1 <- performing erosion on image A    S133b-1

A2 <- performing dilation on A1    S133b-2

A3 <- gaussFilter(A2)    S133b-3

E <- A-A3    S133b-4

returning

FIG. 9

120

121    122

captured image    processed image

Start to capture image    123

FIG. 10

```
        ┌─────────────┐
        │    START    │
        └─────────────┘
               │
               ▼
   ┌────────────────────────┐
   │ capturing image of fundus │     S21
   │ using fundus camera       │
   └────────────────────────┘
               │
               ▼
   ┌────────────────────────┐
   │ displaying captured image │     S22
   │ on display device         │
   └────────────────────────┘
               │
               ▼
   ┌────────────────────────┐
   ││   vessel extraction E   ││     S23
   └────────────────────────┘
               │
               ▼
   ┌────────────────────────┐
   │ displaying vessel-extracted │   S24
   │ image E on display device   │
   └────────────────────────┘
               │
               ▼
        ┌─────────────┐
        │     END     │
        └─────────────┘
```

FIG. 11

```
    ╭─────────────────────╮
    │  obtaining vessel E  │
    │    from image I      │
    ╰─────────────────────╯
              │
              ▼
    ┌─────────────────────┐
    │      L <- I          │ ～ S231
    └─────────────────────┘
              │
              ▼
    ┌─────────────────────┐
    │ L1 <- performing dilation │ ～ S232
    │      on image L      │
    └─────────────────────┘
              │
              ▼
    ┌─────────────────────┐
    │ L2 <- performing erosion │ ～ S233
    │       on L1          │
    └─────────────────────┘
              │
              ▼
    ┌─────────────────────┐
    │  L3 <- gaussFilter(L2) │ ～ S234
    └─────────────────────┘
              │
              ▼
    ┌─────────────────────┐
    │     BH <- L3-L       │ ～ S235
    └─────────────────────┘
              │
              ▼
         ╭──────────╮
         │ returning │
         ╰──────────╯
```

FIG. 12

FIG. 13

FIG. 14

```
      ┌─────────────────────────────┐
      │   obtaining candidate        │
      │   vessel BH from image L     │
      └─────────────────────────────┘
                    │
                    ▼
      ┌─────────────────────────────┐
      │ clarifying image L to        │ ～ S132b-1
      │ obtain LHDR                  │
      └─────────────────────────────┘
                    │
                    ▼
      ┌─────────────────────────────┐
      │ L1<- dilation of LHDR        │ ～ S132b-2
      │        image                 │
      └─────────────────────────────┘
                    │
                    ▼
      ┌─────────────────────────────┐
      │   L2 <- erosion of L1        │ ～ S132b-3
      └─────────────────────────────┘
                    │
                    ▼
      ┌─────────────────────────────┐
      │ L3<-smoothing filter(L2)     │ ～ S132b-4
      └─────────────────────────────┘
                    │
                    ▼
      ┌─────────────────────────────┐
      │       BH <- L3-L             │ ～ S132b-5
      └─────────────────────────────┘
                    │
                    ▼
              ┌──────────────┐
              │  returning   │
              └──────────────┘
```

FIG. 15

clarifying image L to
obtain LHDR

performing bilateral filter
processing on L to obtain B ⟋ S132b-11

D <- L - B ⟋ S132b-12

Bx <-
(B - Z) * K1+Z ⟋ S132b-13

Dx <- D*K2 ⟋ S132b-14

LHDR <-
Bx +Dx ⟋ S132b-15

returning

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005192944 A
- US 2012195481 A1
- US 2007002275 A1

- JP 2014227528 A
- JP 2015054328 A
- JP 2014227530 A

### Non-patent literature cited in the description

- **MENDIOLA-SANTIBANEZ JORGE D et al.** Filtering of mixed Gaussian and impulsive noise using morphological contrast detectors. *IET IMAGE PROCESSING, IET, UK,* 01 March 2014, vol. 8 (3), ISSN 1751-9659, 131-141
- Morphological multiscale segmentation for image coding. **SALEMBIER et al.** SIGNAL PROCESSING. ELSEVIER SCIENCE PUBLISHERS B.V, 01 August 1994, vol. 38, 359-386

- **ANNIE EDEL QUINN E et al.** Retinal blood vessel segmentation using curvelet transform and morphological reconstruction. *EMERGING TRENDS IN COMPUTING, COMMUNICATION AND NANOTECHNOLOGY (ICE-CCN), 2013 INTERNATIONAL CONFERENCE ON, IEEE,* 25 March 2013, 570-575